# EUROPÄISCHE PATENTSCHRIFT

(11) **EP 0 985 524 B1**
(45) Veröffentlichungstag und Bekanntmachung des Hinweises auf die Patenterteilung: **28.05.2003**
(21) Anmeldenummer: 99115308.1
(22) Anmeldetag: 03.08.1999
(51) Int. Cl.: B32B 27/12, B32B 27/40

(54) **Mehrschichtmaterial**
Laminate material
Matériau stratifié

(30) Priorität: 11.09.1998 DE 29816349 U
(43) Veröffentlichungstag der Anmeldung: 15.03.2000
(73) Patentinhaber: Otto Bock HealthCare GmbH, 37115 Duderstadt (DE)
(72) Erfinder: Stender, Adolf Dipl. Ing. Architekt, 37115 Duderstadt (DE)
(74) Vertreter: Gramm, Werner, Prof. Dipl.-Ing.

(56) Entgegenhaltungen:
- DE-A- 3 815 720
- DE-A- 4 308 445

## Beschreibung

Die Erfindung betrifft ein Mehrschichtmaterial, das sich insbesondere gut für dynamische Belastungen eignet, hohe Feuchtigkeitsaufnahme und -weiterleitfähigkeit aufweist und hautverträglich ist.

Erfindungsgemäß weist das Mehrschichtmaterial eine Mittelschicht auf aus einem Gel auf Polyurethanbasis, dessen chemische Struktur aus langen Polymer-Fäden und nur wenigen Verkettungen ohne Verwendung zugesetzter Weichmacher besteht, eine die Mittelschicht auf ihrer einen Seite abdeckende Polyurethan-Folie und eines die Mittelschicht auf ihrer gegenüberliegenden Seite abdeckendes Abstandsgewirk, das aus zwei durch Abstandsfäden miteinander verbundenen textilen Flächen besteht.

DE 4 308 445 offenbart ein Laminat mit einer Polyurethan folie als Träger and einer Polyurethangelschaumschicht.

Dabei ist es zweckmäßig, wenn die Mittelschicht über eine Polyurethan-Folie mit dem Abstandsgewirk verbunden ist. Dabei kann die Polyurethan-Verbindungsfolie verklebt werden oder aber selbstklebend sein.

Die Materialstärke der Mittelschicht beträgt etwa 1,5 bis 4 mm und die der äußeren Abdeckfolie etwa 50 µm.

Das die Mittelschicht bildende Gel ist flexibel aber formstabil und eignet sich besonders gut für dynamische Belastungen. Es weist stabile Eigenschaften im Bereich von -30° C bis +90° C sowie eine vollkommene Anpassungsfähigkeit an alle Formen auf. Dabei sorgt das Fließvermögen des Gels für eine effektive Druckverteilung.

Das an sich bekannte Abstandsgewirk setzt sich zusammen aus einer Warengründe, einer Warenseite und aus diese miteinander verbindenen Legebarren. Die Eigenschaften eines Abstandsgewirkes werden im wesentlichen von den Bindungsstrukturen, also der Einbindung der Fäden in die Fläche, der Maschendichte sowie der Fadenstärke beeinflußt. Verwendbar sind Materialien wie Polyester, Polyamid, Polypropylen oder Glasfasern. Durch ihre 3D-Struktur bieten Abstandsgewirke viele technische Vorteile wie Luftdurchlässigkeit, geringes Gewicht, gutes Rückstellverhalten, Schockabsorption, Wärmezirkulation, Recyclingfähigkeit, Sortenreinheit und gute Verformbarkeit.

Das die Mittelschicht bildende Material wird von der Firma Otto Bock Orthopädische Industrie GmbH & Co., Duderstadt, Deutschland unter der Marke "TechnoGel" angeboten.

Durch die Kombination des an sich bekannten Abstandsgewirkes mit dem die Mittelschicht bildenden Gel, dessen Fließvermögen für eine effektive Druckverteilung sorgt und aufgrund der Vermeidung von Weichmachern besonders hautverträglich ist und seine exzellenten elastischen und mechanischen Eigenschaften auch über längere Zeiträume behält, eignet sich das erfindungsgemäße Mehrschichtmaterial insbesondere für den Einsatz in der Medizintechnik (Bandagen, OP-Auflagen), in der Prothetik (z. B. Stumpfbettung), in der Rehabilitation (z. B. Rollstuhl-Kissen), im Sportbereich (z. B. Einlegesohlen, Handschuhe, Skischuhe) und in der Bekleidungsindustrie (Schuhe, Kleidung).

Das erfindungsgemäße Mehrschichtmaterial gibt die Möglichkeit, das Gel mit verschiedenen Ausführungen von Abstandsgewirken zu kombinieren und hierdurch eine noch bessere (ergonomische) Druckverteilung zu erzielen. Weitere Vorteile durch die Verbindung mit einem Abstandsgewirk liegen in einer Verbesserung der Luftdurchlässigkeit, des Rückstellverhaltens und des Feuchtetransports. Außerdem lassen sich die Shore-Härte einstellen und Scherkräfte besser aufnehmen.

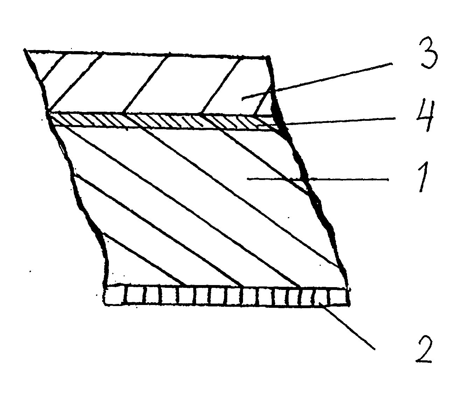

Die Figur zeigt in schematischer Darstellung einen Querschnitt des Mehrschichtmaterials, das aus einer Gel-Mittelschicht 1 besteht, die auf ihrer einen Außenseite durch eine Polyurethan-Folie 2 abgedeckt und auf ihrer gegenüberliegenden Seite über eine Polyurethan-Folie 4 mit einem Abstandsgewirk 3 verklebt ist.

## Patentansprüche

1. Mehrschichtmaterial mit einer Mittelschicht (1) aus einem Gel auf Polyurethanbasis, dessen chemische Struktur aus langen Polymer-Fäden und nur wenigen Verkettungen ohne Verwendung zugesetzter Weichmacher besteht, und einer die Mittelschicht (1) auf ihrer einen Seite abdeckenden Polyurethan-Folie (2) und mit einem die Mittelschicht (1) auf ihrer gegenüberliegenden Seite abdeckenden Abstandsgewirk (3), das aus zwei durch Abstandsfäden miteinander verbundenen textilen Flächen besteht.

2. Mehrschichtmaterial nach Anspruch 1, **dadurch gekennzeichnet, daß** die Mittelschicht (1) über eine Polyurethan-Folie (4) mit dem Abstandsgewirk (3) verbunden ist.

3. Mehrschichtmaterial nach Anspruch 1 oder 2, **dadurch gekennzeichnet, daß** die Mittelschicht (1) eine Materialstärke von etwa 1,5 bis 4 mm aufweist.

4. Mehrschichtmaterial nach Anspruch 1, 2 oder 3, **dadurch gekennzeichnet, daß** die Materialstärke der äußeren Abdeckfolie (2) etwa 50 µm beträgt.

## Claims

1. Multilayered material comprising a midlayer (1) of a polyurethane-based gel whose chemical structure consists of long polymer threads and only a few interconnections without use of added plasticizers and a polyurethane film (2) which covers the midlayer (1) on one of its sides and comprising a spacer fabric (3) which covers the midlayer (1) on its opposite side and which consists of two textile surfaces joined together by spacer threads.

2. Multilayered material according to Claim 1, **characterized in that** the midlayer (1) is joined via a polyurethane film (4) to the spacer fabric (3).

3. Multilayered material according to Claim 1 or 2, **characterized in that** the midlayer (1) is about 1.5 to 4 mm in thickness.

4. Multilayered material according to Claim 1, 2 or 3, **characterized in that** the outer covering film (2) is about 50 µm in thickness.

## Revendications

1. Matériau stratifié comprenant une couche intermédiaire (1) en un gel à base de polyuréthane, dont la structure chimique est constituée de longues chaînes de polymères et de seulement peu de réticulations sans utilisation de plastifiant ajouté, un film de polyuréthane (2) recouvrant la couche intermédiaire (1) sur l'un de ses côtés, et comprenant un tricot d'espacement (3) recouvrant la couche intermédiaire (1) sur son côté opposé, ce tricot d'espacement étant constitué de deux surfaces textiles reliées entre elles par des fils d'espacement.

2. Matériau stratifié selon la revendication 1, **caractérisé en ce que** la couche intermédiaire (1) est reliée au tricot d'espacement (3) par l'intermédiaire d'un film de polyuréthane (4).

3. Matériau stratifié selon la revendication 1 ou 2, **caractérisé en ce que** la couche intermédiaire (1) présente une épaisseur de 1,5 à 4 mm.

4. Matériau stratifié selon la revendication 1, 2 ou 3, **caractérisé en ce que** l'épaisseur du film de recouvrement externe (2) est d'environ 50 µm.
